# FASCICULE DE BREVET EUROPEEN

(11) **EP 1 131 773 B1**
(45) Date de publication et mention de la délivrance du brevet: **28.08.2002**
(21) Numéro de dépôt: 99950810.4
(22) Date de dépôt: 22.10.1999
(51) Int. Cl.: G06K 7/00

(54) **CIRCUIT INTEGRE SANS CONTACT A FAIBLE CONSOMMATION ELECTRIQUE**
KONTAKTFREIE IC MIT NIEDRIGEM ENERGIEVERBRAUCH
CONTACTLESS INTEGRATED CIRCUIT WITH REDUCED POWER CONSUMPTION

(30) Priorité: 23.10.1998 FR 9813470
(43) Date de publication de la demande: 12.09.2001
(73) Titulaire: Inside technologies, 69930 Saint-Clément-les-Places (FR)
(72) Inventeur: SERRA, Didier, 13240 Septème les Vallons (FR); PANGAUD, Nicolas, Leader 06400 Cannes (FR); MARTIN, Michel, 13840 Rognes (FR); BERGOUIGNAN, François, Le Revest-Rigouline, 13100 Aix en Provence (FR)
(74) Mandataire: Marchand, André
(86) Numéro de dépôt international: FR9902569
(87) Numéro de publication internationale: WO00025253

(56) Documents cités:
- EP-A- 0 299 639
- US-A- 4 681 111
- US-A- 4 786 903
- US-A- 4 935 736
- US-A- 5 252 962
- US-A- 5 598 446
- US-A- 5 699 066

## Description

La présente invention concerne les circuits intégrés sans contact fonctionnant par induction électromagnétique, du type utilisé dans les cartes à puces sans contact, les étiquettes électroniques, les badges électroniques...

La présente invention concerne plus particulièrement un circuit intégré sans contact comprenant un dispositif de modulation de la charge d'une bobine d'antenne, un dispositif d'extraction d'horloge et des moyens pour délivrer un signal de modulation de charge en fonction d'un signal binaire à transmettre.

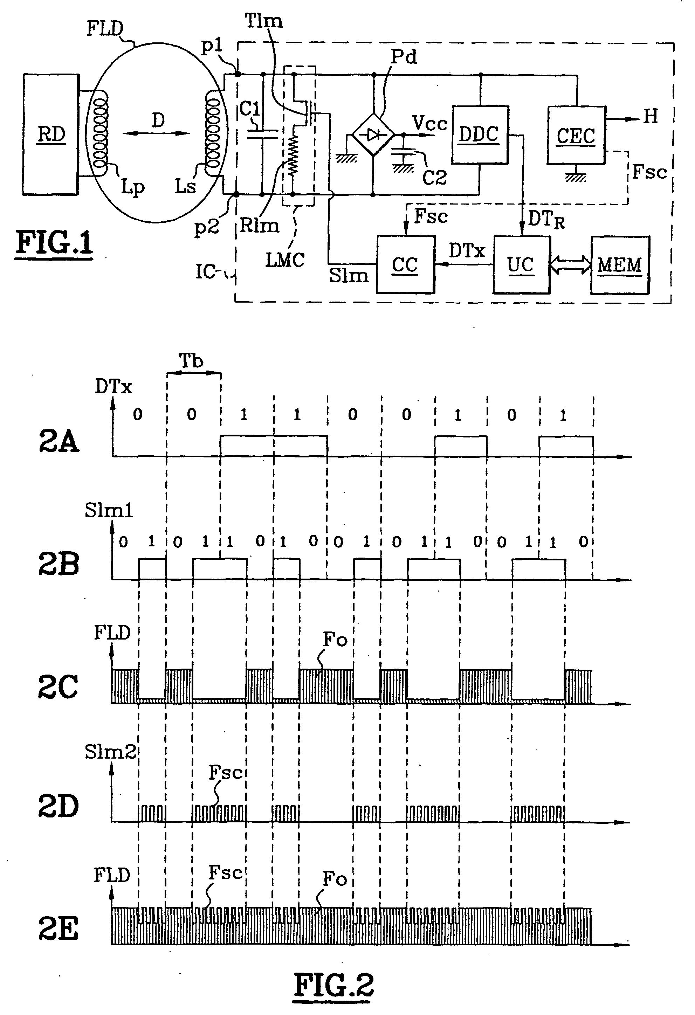

A titre de rappel, la figure 1 représente schématiquement l'architecture d'un circuit intégré sans contact IC, connecté à une bobine d'antenne Ls par l'intermédiaire de plots p1, p2. La bobine Ls forme, avec une capacité intégrée C1, un circuit résonant de fréquence propre Fo. Le circuit IC est agencé à proximité d'une station d'émission-réception de données RD, par exemple un lecteur de carte à puce, équipée d'une bobine primaire Lp. L'ensemble forme un système bidirectionnel de transmission de données par couplage inductif.

Le circuit IC comprend une unité centrale UC, une mémoire rémanente MEM de type EEPROM, un pont redresseur Pd suivi d'une capacité de lissage C2, et un circuit extracteur d'horloge CEC. En présence d'un champ magnétique alternatif FLD de fréquence Fo émis par la bobine primaire Lp, une tension alternative induite Vac apparaît aux bornes de la bobine Ls. Le redresseur Pd extrait de la tension Vac une tension continue Vcc assurant l'alimentation électrique du circuit IC, et le circuit CEC extrait de la tension Vac un signal d'horloge H dont la fréquence est un sous-multiple de la porteuse Fo. La station RD extrait également son propre signal d'horloge de la fréquence Fo, de sorte que le circuit IC et la station RD sont synchronisés.

Dans un tel système, la transmission de données DT_{R} au circuit intégré IC est généralement faite par modulation de l'amplitude du champ magnétique FLD, le circuit IC comprenant à cet effet un circuit DCC pour démoduler la tension induite Vac, décoder le signal de modulation et délivrer à l'unité centrale UC les données DT_{R} reçues.

Dans ce qui suit, on va s'intéresser plus particulièrement à la transmission de données DTx à la station RD par modulation de charge. Un telle modulation de charge est généralement obtenue au moyen d'un circuit modulateur LMC connecté aux bornes de la bobine Ls et comprenant par exemple un interrupteur Tlm et une résistance Rlm en série. Les données DTx à transmettre sont appliquées à un circuit codeur CC dont la sortie délivre un signal de modulation codé Slm appliqué au circuit modulateur LMC. Ce dernier court-circuite la bobine Ls en fonction du signal Slm et la modulation de charge se répercute par couplage inductif sur la bobine primaire Lp. Des opérations inverses de démodulation et de décodage. permettent à la station RD de recevoir les données DTx.

A titre d'exemple d'art antérieur en matière de modulation de charge, le brevet US 4,681,111 décrit en relation avec ses figures 1 et 2 un circuit intégré utilisant un signal de modulation de charge codé BPSK (sauts de phase). Ce brevet décrit également en relation avec ses figures 13, 14 une technique de transmission de données qui n'entre pas dans le cadre de la présente demande, selon laquelle un circuit d'antenne est excité par une tension continue par l'intermédiaire d'un interrupteur. L'interrupteur est piloté par un signal codé constitué par des impulsions de largeur variable, et sa fermeture provoque l'apparition dans le circuit d'antenne d'une oscillation qui se répercute sur la bobine de la station de réception de données.

Par ailleurs, il est connu que la modulation de charge peut être faite au moyen d'un signal de modulation Slm binaire combiné avec une sous-porteuse Fsc extraite de la porteuse Fo, comme cela est décrit dans le brevet US 4,857,893 ainsi que le brevet US 5,345,231 ou son équivalent EP 0473569. Notons que la modulation de charge décrite dans le brevet US 4,857,893 consiste en une injection de la sous-porteuse dans une branche d'un pont redresseur au moyen d'une porte logique. L'injection d'un "0" entraîne un court-circuit partiel d'une branche du pont redresseur, soit une modulation de charge équivalente à celle obtenue au moyen d'un interrupteur en parallèle avec la bobine d'antenne.

Il est généralement admis qu'une telle modulation de charge est plus avantageuse qu'une modulation de charge binaire en raison d'un meilleur rapport signal/bruit à la réception permettant de choisir une profondeur de modulation plus faible, par exemple de l'ordre de 30 % contre 50 à 70 % avec une modulation de charge binaire, pour améliorer le transfert d'énergie au circuit IC pendant les périodes de modulation de charge.

Il n'en demeure pas moins, en pratique, que les périodes- de modulation de charge provoquent une atténuation sensible de l'énergie transmise au circuit- intégré IC, même lorsqu'une sous-porteuse est utilisée. Cela se traduit par une atténuation de la tension induite Vac et de la tension d'alimentation Vcc, et par conséquent une diminution de la distance maximale D de communication avec le circuit IC, au-delà de laquelle le circuit IC cesse de fonctionner.

Ce.problème se cumule en pratique avec un problème de consommation du circuit intégré IC apparaissant dans les applications haute fréquence, par exemple lorsque la porteuse Fo présente la valeur standard de 13,56MHz. Le circuit intégré IC étant généralement de technologie CMOS, sa consommation dépend de la vitesse de commutation des transistors qui le constituent. Notamment, le circuit d'extraction d'horloge CEC, qui est piloté par la porteuse Fo, peut consommer à lui seul un courant de l'ordre de 10 µA sous une tension Vcc de 2V, pour une consommation totale du circuit intégré de l'ordre de 20 µA. Une telle consommation doit être compensée par un plus fort couplage inductif entre la station RD et le circuit IC, ce qui implique à nouveau une diminution de la distance maximale de communication.

Ainsi, un objectif de la présente invention est de prévoir un procédé de modulation de charge qui perturbe moins le champ magnétique et permette une meilleure transmission de l'énergie à un circuit intégré sans contact.

Un autre objectif de la présente invention est de diminuer la consommation d'un circuit intégré sans contact pendant les périodes de modulation de charge.

Pour atteindre ces objectifs, la présente invention prévoit un circuit intégré sans contact du type défini ci-dessus, comprenant des moyens pour délivrer un signal de modulation de charge pulsé comprenant une suite d'impulsions de modulation de charge dont la durée est calibrée de façon asynchrone par la charge ou la décharge d'au moins un condensateur.

Avantageusement, le circuit intégré comprend des moyens pour inhiber le dispositif d'extraction d'horloge au moins pendant l'émission des impulsions de modulation de charge.

Selon un mode de réalisation, les moyens pour délivrer le signal de modulation de charge pulsé comprennent au moins deux condensateurs et des moyens pour charger le premier condensateur avec un courant constant avant l'émission d'une impulsion de modulation de charge, pendant une durée fixée par un nombre déterminé de cycles d'horloge, charger le deuxième condensateur avec un courant constant pendant l'émission d'une impulsion, et arrêter l'émission de l'impulsion lorsque la tension de charge du deuxième condensateur est égale à la tension aux bornes du premier condensateur.

Selon un mode de réalisation, le circuit intégré comprend des. moyens pour transformer le signal binaire à transmettre en un signal codé binaire présentant au moins, à chaque bit du signal binaire, un front de variation montant ou descendant, et transformer des fronts de variation du signal codé binaire en impulsions de modulation de charge de courte durée relativement à la durée d'un bit du signal binaire à transmettre.

Selon un mode de réalisation, seuls des fronts de variation d'un même type, montant ou descendant, du signal codé binaire, sont transformés en impulsions de modulation de charge par les moyens pour délivrer le signal de modulation.

Selon un mode de réalisation, le signal de modulation de charge pulsé est combiné avec un signal alternatif pour former un signal de modulation de charge comprenant des impulsions de signal alternatif.

De préférence, les impulsions de modulation de charge sont d'une durée inférieure ou égale au quart de la durée d'un bit du signal binaire à transmettre.

Selon un mode de réalisation, le dispositif d'extraction d'horloge est maintenu inhibé après l'émission d'une impulsion de modulation de charge, au moins pour une durée égale à la durée d'une impulsion de modulation de charge.

Selon un mode de réalisation, le dispositif d'extraction d'horloge est agencé pour extraire un signal d'horloge d'une tension alternative induite dans la bobine d'antenne.

Selon un mode de réalisation, le circuit intégré comporte des moyens pour extraire une tension d'alimentation continue d'une tension alternative induite dans la bobine d'antenne.

Selon un mode de réalisation, les moyens pour inhiber le dispositif d'extraction d'horloge comprennent des moyens pour mettre hors tension le dispositif d'extraction.

Ces objets, caractéristiques et avantages ainsi que d'autres de la présente invention seront exposés plus en détail dans la description suivante d'un procédé de modulation de charge selon l'invention, d'un dispositif de modulation de charge selon l'invention et d'un circuit intégré comprenant un tel dispositif, en relation avec les figures jointes parmi lesquelles :
- la figure 1 précédemment décrite représente sous forme de blocs l'architecture classique d'un circuit intégré sans contact,
- les figures 2A à 2E sont des chronogrammes de signaux électriques illustrant deux méthodes classiques de modulation de charge,

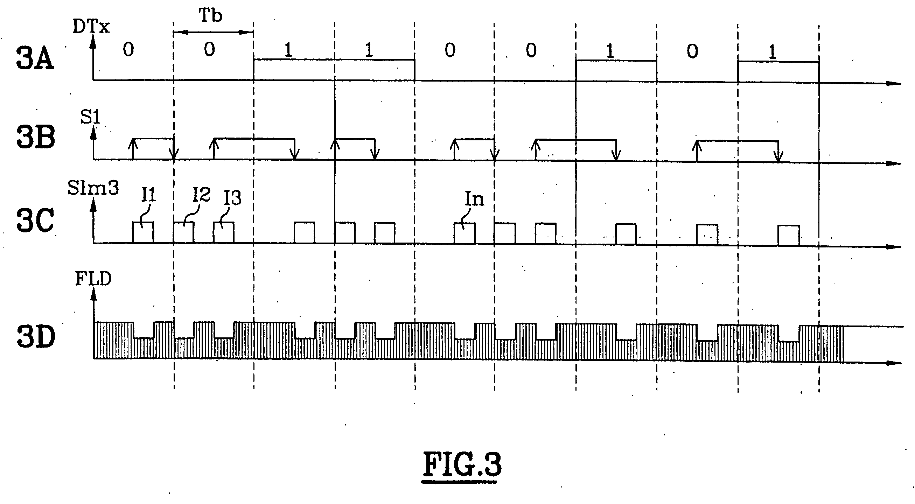

- les figures 3A à 3D sont des chronogrammes de signaux électriques illustrant le principe général du procédé de modulation de charge selon l'invention,

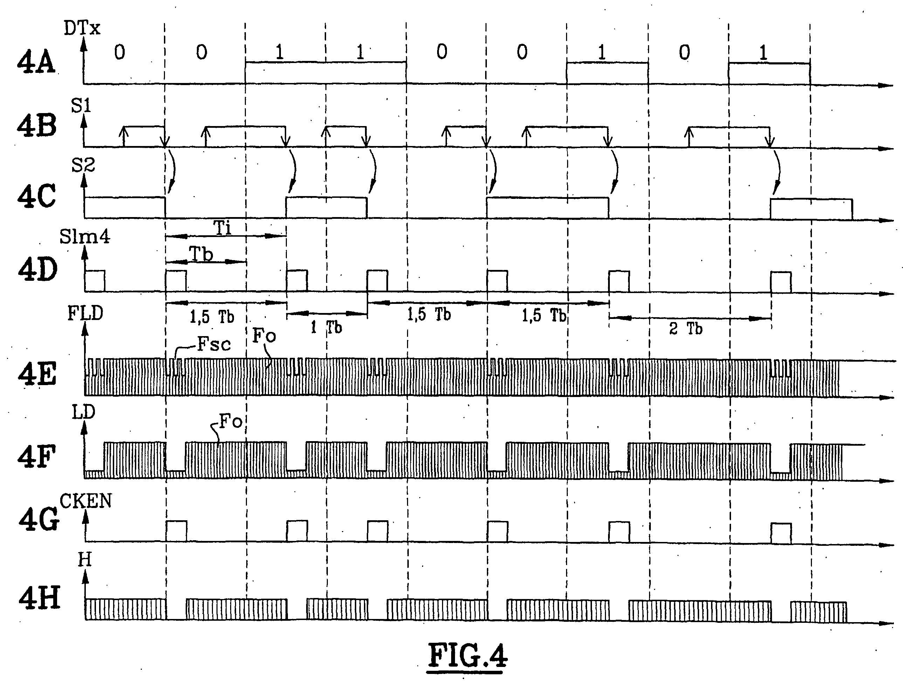

- les figures 4A à 4H sont des chronogrammes de signaux électriques illustrant un mode de réalisation préféré du procédé selon l'invention,

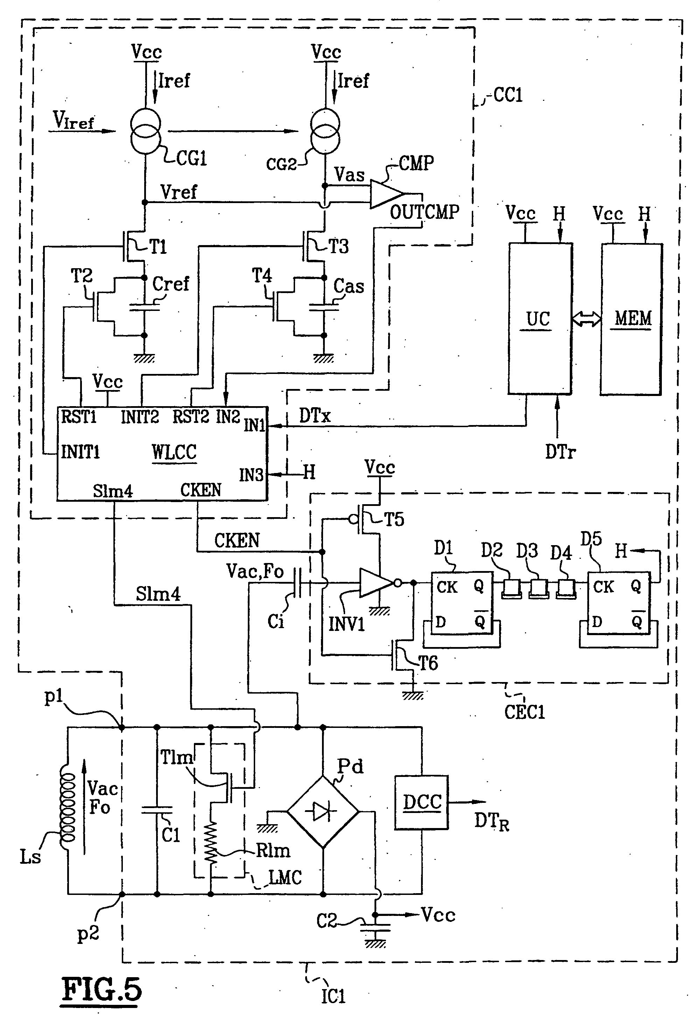

- la figure 5 est le schéma électrique d'un circuit intégré sans contact comprenant un dispositif de modulation de charge de la figure 5,

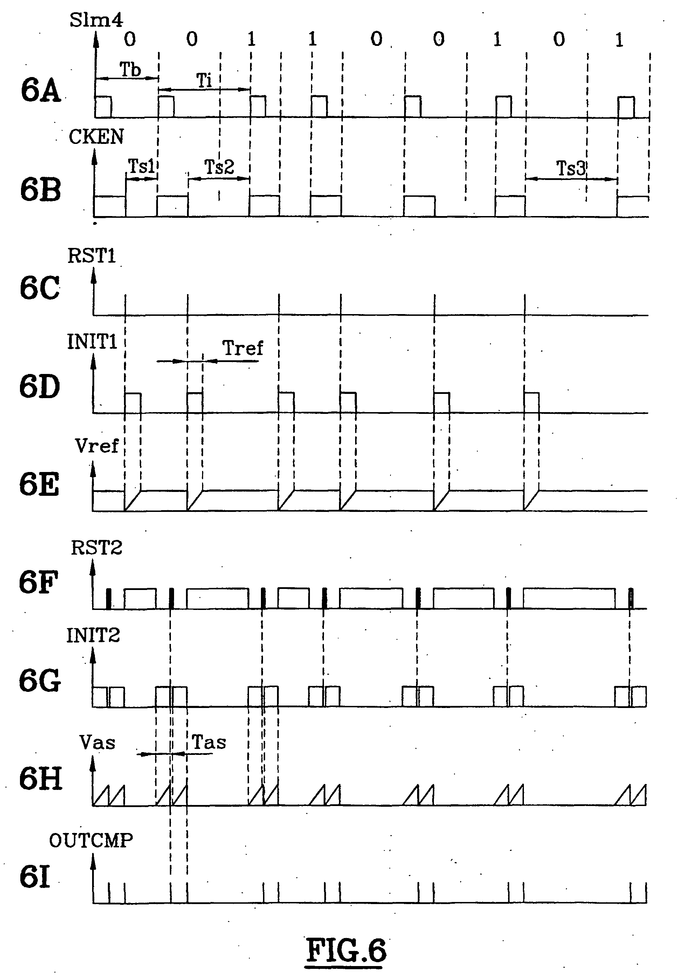

- les figures 6A à 6I sont des chronogrammes de divers signaux électriques apparaissant dans le dispositif de modulation de charge selon l'invention, et

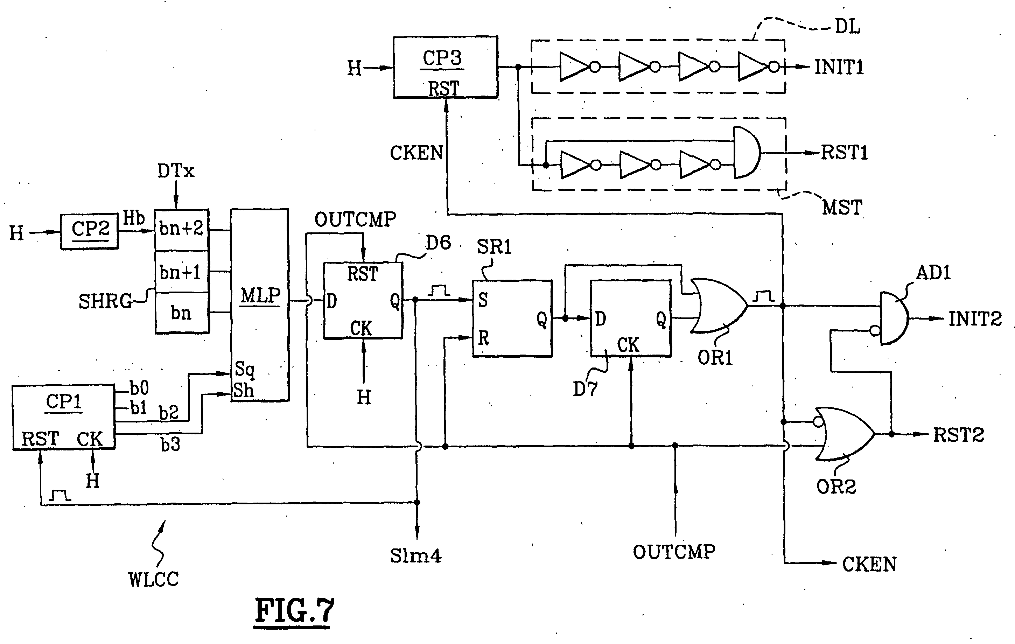

- la figure 7 est le schéma électrique d'un circuit logique représenté sous forme de bloc sur la figure 5.

### Rappels concernant l'art antérieur

Les figures 2A à 2C illustrent la technique classique de modulation de charge binaire évoquée au préambule. La figure 2A représente le signal à transmettre DTx, la figure 2B représente un signal binaire de modulation de charge Slm1 issu du signal DTx, et la figure 2C représente l'enveloppe du champ magnétique FLD pendant la transmission du signal DTx. Le signal Slm1 est obtenu ici par codage Manchester du signal DTx, de sorte qu'un bit à "0" du signal DTx est codé par la suite de bits "01" et un bit à "1" est codé par la suite de bits "10". Quand le signal Slm1 est à 1, le champ magnétique FLD présente une atténuation d'amplitude nette et constante par effet de court-circuit magnétique. Un front de modulation descendant au milieu de la période binaire Tb correspond à la transmission d'un "1" et un front de modulation montant correspond à la transmission d'un "0".

La figure 2E représente l'enveloppe du champ magnétique FLD quand la modulation de charge est faite au moyen d'une sous-porteuse Fsc extraite de la porteuse Fo, par exemple au moyen du circuit CEC représenté sur la figure 1. Le signal Slml de la figure 2B est combiné avec la sous-porteuse Fsc pour former le signal de modulation Slm2 représenté sur la figure 2D. Dans ce cas, une période de modulation suivie d'une période de repos correspond à la transmission d'un "1" et une période de repos suivi d'une période de modulation correspond à la transmission d'un "0", conformément au codage Manchester du signal Slm1.

Quelle que soit la méthode retenue, les périodes de modulation représentent au moins 50% du temps de transfert des données DTx. Comme on l'a expliqué au préambule, la modulation de charge limite l'énergie transmise par induction et diminue la distance maximale de.communication avec un circuit intégré sans contact.

### Premier aspect de l'invention : réduction de la durée des périodes de modulation de charge

Selon un premier aspect de l'invention, on prévoit de transformer les fronts de variation d'un signal de modulation de charge classique en impulsions de modulation, de sorte qu'un signal de modulation de charge selon l'invention est un signal pulsé, constitué par des impulsions de modulation de charge. En choisissant des impulsions de modulation de faible largeur et un codage assurant une faible récurrence des impulsions, on réduit significativement la durée des périodes de modulation et on améliore le transfert d'énergie par induction.

A titre d'exemple, la figuré 3A représente un signal DTx à transmettre par modulation de charge, identique à celui de la figure 2A. La figure 3B représente un signal codé S1 obtenu par codage Manchester du signal DTx, identique au signal Slm1 de la figure 2B, et la figure 3D représente l'enveloppe du champ magnétique FLD. Ici, le signal S1 n'est pas utilisé comme signal de modulation mais est transformé en une suite d'impulsions I1, I2, I3...In formant un signal de modulation Slm3 selon l'invention. La durée des impulsions est choisie ici égale ou inférieure au quart de la période binaire Tb et les périodes de modulation de charge représentent statistiquement moins de 50% du temps de transfert du signal DTx, comme cela apparaît sur la figure 3D.

Les figures 4A à 4D illustrent un mode de réalisation préféré du procédé selon l'invention dans lequel la récurrence des impulsions de modulation de charge, c'est-à-dire le nombre moyen d'impulsions par unité de temps, est diminuée au regard de l'exemple précédent. Les figures 4A et 4B sont identiques aux figures 3A et 3B et représentent le signal à transmettre DTx et le signal S1 codé Manchester. Ici, seuls des fronts de variation du signal S1 d'un même type, ici des fronts descendants, sont transformés en impulsions de modulation de charge, pour former le signal de modulation Slm4 représenté en figure 4D. En pratique, la transformation du signal S1 en signal Slm4 peut être obtenue par une étape intermédiaire de transformation du signal S1 en un signal S2 codé Miller présentant un front montant ou descendant à chaque front d'un même type, ici descendant, du signal S1. Ensuite, chaque front montant et descendant du signal S2 est transformé en une impulsion de modulation de charge I1, I2, I3...In dont la durée est ici choisie égale au quart de la période binaire Tb du signal DTx.

Le codage du signal Slm4 étant en soi connu sous la dénomination de codage Miller pulsé, il doit être souligné que la présente invention n'a pas pour objet une nouvelle technique de codage mais consiste plutôt en une application d'une technique de codage connue au domaine de la modulation de charge, pour la diminution du temps moyen de modulation de charge et l'obtention d'une meilleure transmission de l'énergie par induction pendant les périodes de modulation de charge. Des essais réalisés par la demanderesse ont montré que de telles impulsions de modulation sont facilement détectables par une station d'émission-réception du type représenté sur la figure 1, pourvue d'un circuit de démodulation classique, et se traduisent notamment par des impulsions de courant brèves et nettes dans la bobine primaire Lp.

Une fois les impulsions de modulation détectées, le décodage du signal Slm4 pour la récupération des bits du signal DTx nécessite un simple comptage de la durée Ti séparant deux impulsions. Pour fixer les idées, le tableau 1 ci-après illustre l'algorithme de décodage du signal Slm4 et donne la valeur du bit ou des bits suivants en fonction de la valeur du bit ou des bits précédents et de la durée Ti entre deux impulsions. Le bit ou les bits précédents étant connus, la valeur du bit suivant ou de la paire de bits suivants découle immédiatement de la durée Ti. Afin d'initialiser l'algorithme, il convient d'insérer dans le signal DTx une séquence binaire choisie par convention, connue du dispositif réalisant le décodage. Cette séquence peut être par exemple une suite de "1" (un seul "1" étant suffisant) ou une suite de "0" (une paire de zéros "00" étant suffisante). Par ailleurs, les valeurs mentionnées dans le tableau doivent être inversées si l'on choisit de transformer en impulsions de modulation les fronts montants du signal S1.

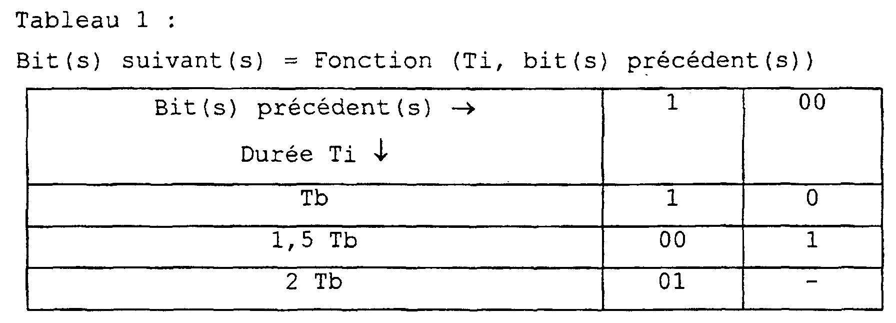

Ainsi, la présente invention permet de réduire significativement les périodes de modulation de charge, une impulsion de modulation de charge permettant de coder un ou deux bits selon l'ordre de succession des bits. Statistiquement, les périodes de modulation de charge représentent 12,5% du temps de transfert du signal DTx lorsque celui-ci est composé d'une alternance de "0" et de "1", et 25% du temps de transfert lorsque le signal DTx comprend une suite de "1" ou une suite de "0", pour une largeur d'impulsion égale au quart de la période binaire Tb du signal DTx. La durée moyenne de modulation de charge avec un signal DTx quelconque se situe entre ces deux extrêmes.

Bien entendu, le terme "impulsion de modulation" ne doit pas être interprété comme signifiant uniquement qu'une modulation de charge selon l'invention est une modulation binaire. En pratique, les impulsions de modulation de charge peuvent être combinées avec une sous-porteuse Fsc pour produire des impulsions de sous-porteuse. L'aspect du champ magnétique FLD modulé par de telles impulsions de sous-porteuse Fsc est représenté sur la figure 4E. Dans ce cas, les impulsions -de. modulation de charge définissent simplement des fenêtres de modulation. Par ailleurs, l'aspect du champ magnétique FLD modulé directement par le signal Slm4 est représenté sur la figure 4F.

### Deuxième aspect de l'invention : réduction de la consommation électrique pendant la modulation de charge

On va maintenant décrire un autre aspect de l'invention, qui vise à diminuer la consommation électrique d'un circuit intégré sans contact pendant les périodes de modulation de charge. Comme on l'a indiqué au préambule, la consommation d'un circuit intégré sans contact n'est pas négligeable avec une porteuse H.F., le circuit extracteur d'horloge pouvant consommer à lui seul près de 25% à 50% du courant fourni au circuit intégré.

Ici l'idée de la présente invention est de calibrer la durée des impulsions de modulation dé charge au moyen d'un circuit analogique asynchrone du -type à charge ou à décharge de condensateur, et d'arrêter le circuit extracteur d'horloge pendant les. périodes d'émission des impulsions. Pour fixer les idées, la figure 4G représente un signal d'inhibition d'horloge CKEN selon l'invention et la figure 4H représente le signal d'horloge H extrait de la porteuse Fo. Le signal CKEN est mis à 1 pendant l'émission des impulsions de modulation de charge, et le signal d'horloge H est interrompu pendant ces périodes. Un circuit intégré fonctionnant de cette manière présente une période de fonctionnement asynchrone pendant l'émission d'impulsion de modulation de charge, pendant laquelle sa consommation électrique est pratiquement nulle, et une période de fonctionnement synchrone entre la fin de l'impulsion et le début de l'impulsion suivante.

Cet aspect de l'invention est mis en oeuvre au moyen d'un circuit codeur CC1, représenté sur la figure 5 au sein d'un circuit intégré sans contact IC1. Le circuit intégré ICI est semblable au circuit IC de la figure 1 à l'exception du circuit codeur CC1, qui remplace le circuit classique CC, et d'un circuit extracteur d'horloge CECI remplaçant le circuit classique CEC. Les autres éléments du circuit ICI sont désignés par les mêmes références qu'en figure 1.

Le circuit codeur CC1 comprend un séquenceur à logique câblée WLCC, une capacité Cref, une capacité Cas, divers interrupteurs T1, T2, T3, T4 prenant la forme de transistors NMOS, un comparateur CMP et deux générateurs de courant CG1, CG2 agencés en miroir de courant et commandés par une tension V_{Iref}. Ici, les deux capacités Cref, Cas sont de même valeur et les générateurs CG1, CG2 délivrent le même courant Iref. Le séquenceur WLCC délivre des signaux INIT1, RST1, INIT2, RST2, le signal CKEN d'inhibition d'horloge décrit plus haut, ainsi que le signal de modulation Slm4, appliqué au circuit modulateur de charge LMC. Le séquenceur WLCC reçoit sur une entrée IN1 les données DTx à transmettre, lues dans la mémoire MEM et envoyées par l'unité centrale UC. Le séquenceur WLCC reçoit également sur une entrée IN2 le signal de sortie OUTCMP du comparateur CMP, et reçoit sur une entrée IN3 le signal d'horloge H délivré par. le circuit extracteur CC1. La capacité Cref est connectée au générateur CG1 par l'intermédiaire de l'interrupteur T1, qui est piloté par le signal INIT1. L'interrupteur T2 est agencé en parallèle avec la capacité Cref et est piloté par le signal RST1. De façon similaire, la capacité. Cas est connectée au générateur CG2 par l'intermédiaire de l'interrupteur T3 qui est piloté par le signal INIT2. L'interrupteur T4 est agencé en parallèle avec la capacité Cas et est piloté par le signal RST2. Enfin, les anodes des capacités Cref, Cas, de tensions respectives Vref, Vas, sont appliquées sur les entrées du comparateur CMP.

Le circuit extracteur d'horloge CEC1 comprend de façon classique des bascules D en cascade, par exemple cinq bascules D1 à D5. Les bascules ont leur sortie /Q ramenée sur l'entrée D et la sortie Q de chaque bascule attaque l'entrée d'horloge CK de la bascule suivante. La sortie Q de la dernière bascule D5 délivre le signal d'horloge H. L'entrée CK de la première bascule D1 reçoit la tension Vac de fréquence Fo, par l'intermédiaire d'une capacité d'isolement Ci et d'une porte inverseuse INV1 servant de tampon d'entrée. Ainsi, la fréquence F_{H} de l'horloge H est ici égale à la fréquence porteuse Fo divisée par 16, soit 847kHz pour une porteuse de 13,56MHz.

Selon l'invention, la porte INV1 est alimentée en tension Vcc par l'intermédiaire d'un transistor PMOS T5 piloté par le signal CKEN et la sortie de la porte INV1 est connectée à la masse par l'intermédiaire d'un transistor NMOS T6 piloté par le signal CKEN. Ainsi, quand le signal CKEN est à 1, le circuit extracteur CEC1 est inhibé et ne consomme plus de courant.

Le fonctionnement du circuit CC1 est illustré par les figures 6A à 6I, qui représentent respectivement les signaux Slm4, CKEN, RST1, INIT1, Vref, RST, INIT2, Vas, OUTCMP. On distingue des périodes de fonctionnement synchrone, pendant lesquelles le circuit CC1 est synchronisé par le signal d'horloge H, et des périodes de fonctionnement asynchrone, pendant lesquelles le signal CKEN est à 1 et le circuit extracteur d'horloge CECI inhibé.

### Périodes de fonctionnement synchrone

Pendant ces périodes, le signal RST2 est à 1 et la capacité Cas est maintenue déchargée. Le séquenceur WLCC reçoit un nouveau bit du signal DTx et calcule l'instant où une impulsion doit être envoyée. Parallèlement, le séquenceur WLCC met brièvement le signal RST1 à 1 pour décharger la capacité Cref et met ensuite le signal INIT1 à 1 pendant un temps Tref. Le temps Tref est fixé par un nombre déterminé de cycles d'horloge H et représente ici un quart de la période binaire Tb du signal DTx. La tension Vref apparaissant aux bornes de la capacité Cref est ainsi déterminée par le temps de charge Tref et le courant Iref.

### Périodes de fonctionnement asynchrone

Lorsque le signal Slm4 est mis à 1, c'est-à-dire lorsqu'une impulsion de modulation est envoyée, le signal CKEN est mis à 1, le signal RST2 est mis à 0 et le signal INIT2 mis à 1. La capacité Cas se charge pendant un temps Tas jusqu'à ce que la tension Vas à ses bornes atteigne la valeur Vref et que le signal OUTCMP passe à 1. Lorsque le signal OUTCMP passe à 1, le signal Slm4 est remis à 0, ce qui représente la fin de l'impulsion.

Les périodes de fonctionnement asynchrone peuvent se terminer à cet instant et le signal CKEN remis à 0. Toutefois, de façon optionnelle, on préfère les prolonger de manière à réduire encore plus la consommation du circuit IC1. Ainsi, comme on le voit sur la figure 6, la capacité Cas est déchargée très rapidement à la fin de chaque impulsion (RST2 = 1) pour être rechargée immédiatement (INIT2 = 1). Le signal CKEN, figure 6B, n'est remis à 0 qu'au terme du cycle de charge supplémentaire, lorsque le signal OUTCMP passe à 1 pour la deuxième fois. La durée des périodes asynchrones est donc ici égale à 2Tas.

Il découle de ce qui précède que le temps Tas est égal au temps Tref qui est déterminé de façon synchrone, les capacités Cref, Cas étant de même valeur et chargée au moyen d'un même courant Iref. Ainsi, les impulsions de modulation présentent une durée Tas qui ne dérive pas avec le temps, la température et le vieillissement du circuit intégré. La durée Tas peut être définie comme étant "pseudo synchrone" et permet au circuit intégré IC1 de rester synchrone avec une station d'émission-réception de données malgré la suppression cyclique du signal d'horloge H. Il est clair que cet aspect d'invention est susceptible de diverses variantes en ce qui concerne les valeurs de capacités Cref, Cas et des courants de charges, qui pourraient être différents. De même, la durée Tas pourrait être un multiple ou un sous-multiple de Tref. Ce qui importe, c'est que la capacité Cref soit chargée de façon synchrone, et que le rapport entre le courant de charge de la capacité Cref et le courant de charge de la capacité Cas reste constant au fil du temps.

D'autre part, tous les éléments synchrones du circuit intégré ICI étant bloqués pendant les périodes de fonctionnement asynchrone, il apparaît que la consommation électrique du circuit ICI se limite au courant de charge Iref et au courant consommé par le pont redresseur Pd, soit une consommation pratiquement nulle de l'ordre du microampère. Ainsi, l'invention résout efficacement le problème de la consommation des circuits intégrés sans contact pendant les périodes de modulation de charge. La distance de communication avec le circuit intégré ICI est portée à sa valeur maximale, déterminée par la puissance d'émission de la bobine d'antenne d'une station d'émission-réception de données.

### Exemple de réalisation du séquenceur WLCC

La figure 7 représente un exemple simple de réalisation du séquenceur WLCC dans le cas où la période binaire Tb du signal DTx comprend 16 cycles d'horloge H, soit une fréquence d'horloge binaire Hb de 52kHz environ pour une fréquence d'horloge H de 847kHz. Le séquenceur WLCC est réalisé au moyen d'un circuit de codage classique MLP réalisant un codage Miller pulsé du signal DTx, la transformation du signal DTx en signal intermédiaire S1 codé Manchester étant implicite. De façon classique, le circuit MLP reçoit en entrée trois bits bn, bn+1, bn+2 du signal DTx, stockés dans un registre à décalage SHRG et renouvelés d'un bit à chaque nouveau cycle de l'horloge binaire Hb. Toujours de façon classique, le circuit MLP reçoit en entrée des signaux Sq et Sh indiquant respectivement que le quart de la période binaire Hb et la moitié de la période binaire Hb sont atteint. Le bit Sq est ici un bit b2 prélevé à la sortie d'un compteur par 16 CP1, piloté par le signal d'horloge H, comprenant quatre bits de sortie b0, b1, b2, b3. Le bit Sh est le bit b3.

Afin de compenser la perte du signal d'horloge pendant les périodes asynchrones, qui représentent ici la moitié de la période binaire Tb, soit 8 cycles d'horloge, le compteur CP1 est agencé pour démarrer chaque nouveau comptage à partir d'une valeur offset égale à 8, après chaque remise à zéro sur son entrée RST. Pour la même raison, le signal d'horloge binaire Hb de période Tb est délivré par un compteur CP2 délivrant un signal d'horloge Hb tous les 8 cycles d'horloge H, au lieu de 16 dans l'art antérieur.

La sortie Miller pulsé du circuit MLP est appliquée sur l'entrée D d'une bascule D6 synchronisée par le signal d'horloge H. La sortie Q de la bascule D6 est appliquée sur l'entrée S d'une bascule SR1 et sur l'entrée RST de remise à 0 du compteur CP1. La sortie Q de la bascule SR1 est appliquée sur l'entrée D d'une bascule D7 et sur une entrée d'une porte OU OR1 recevant sur son autre entrée la sortie Q de la bascule D7. La sortie de la porte OR1 est envoyée sur une entrée d'une porte ET AD1 et sur l'entrée inversée d'une porte OU OR2. La porte AD1 reçoit également sur une entrée inversée la sortie de la porte OR2. Le signal OUTCMP délivré par le comparateur CMP (figure 5) est appliqué respectivement sur une entrée de la porte OR2, sur l'entrée d'horloge CK de la bascule D7, sur l'entrée R de la bascule SR1 et sur l'entrée de remise à zéro RST de la bascule D6.

Le signal. Slm4 est prélevé sur la sortie Q de la bascule D6, le signal d'inhibition d'horloge CKEN est prélevé à la sortie de la porte OR1, le signal INIT2 est prélevé à la sortie de la porte AD1 et le signal RST2 prélevé à la sortie de la porte OR2.

### Envoi d'une impulsion

Le commencement d'une impulsion de modulation de charge est déclenché par le codeur MLP et est synchronisé à l'horloge H par la bascule D6. Lorsque l'impulsion est émise (Slm4 = 1) le compteur CP1 est ramené à la valeur offset et les sorties Q des bascules D6 et SR1 passent à 1. Les signaux CKEN et INIT2 passent à 1 et le signal RST2 passe à 0.

### Fin d'une impulsion

La fin d'une impulsion de modulation est déclenchée par le passage à 1 du signal OUTCMP, après un temps Tas = Tref. La bascule D6 est remise à zéro et le signal RST2 est mis provisoirement à 1, jusqu'à ce que la capacité Cas soit déchargée.

### Prolongement de la période asynchrone

A la fin d'une impulsion, la bascule SR1 passe à 0 mais la sortie Q de la bascule D7 passe à 1, ce qui permet de maintenir à 1 le signal CKEN. A la fin du deuxième cycle de charge de la capacité Cas, le signal OUTCOMP passe à 1 pour la deuxième fois et la sortie de la bascule D7 passe à 0, de sorte que le signal CKEN passe à 0. Le signal d'horloge H est à nouveau émis et le compteur CP1 est réactivé.

### Période synchrone : initialisation de Cref

Le séquenceur WLCC comprend un compteur CP3 piloté par le signal d'horloge H, recevant le signal CKEN sur son entrée de remise à zéro RST. Après avoir été remis à zéro au commencement d'une période synchrone, le compteur CP3 met sa sortie à 1 une seule fois lorsque d'une valeur de comptage quelconque, par exemple le nombre "3", est atteinte. La sortie du compteur CP3 est appliquée à un circuit monostable logique MST et à une ligne à retard logique DL. Le circuit monostable délivre le signal RST1 sous la forme d'une impulsion et la ligne à retard DL délivre le signal INIT1 après l'impulsion RST1.

### Variantes de l'invention

Il apparaîtra clairement à l'homme de l'art que la présente invention est susceptible de diverses variantes et perfectionnements.

D'une part, l'utilisation du codage Miller pulsé n'a été donné qu'à titre d'exemple non limitatif, ainsi que le codage Manchester du signal S1. De façon générale, le signal S1 peut revêtir toute forme codée comportant au moins un front de variation à chaque période binaire Tb. Egalement, ce front de variation peut être calé sur le quart de période Tb, les trois quarts de période Tb,... au lieu d'être calé sur la demi-période Tb comme décrit plus haut.

D'autre part, il est à la portée de l'homme de l'art de prévoir d'autres variantes de réalisation du système de base de temps asynchrone selon l'invention, par des charges ou des décharges de condensateurs.

Par ailleurs, une variante de réalisation consiste à prolonger la durée de la période asynchrone en renouvelant le cycle de charge de la capacité Cas autant que nécessaire. En effet, on aperçoit sur la figure 6B diverses périodes Ts1, Ts2, Ts3 de fonctionnement synchrone de durées inégales, qui dépendent de la durée Ti entre deux impulsions. Les périodes synchrones les plus longues Ts2, Ts3 peuvent ainsi être raccourcies et ramenées à la durée de la période synchrone la plus courte Ts1, en enchaînant plusieurs cycles de charge de la capacité Cas. En pratique, la durée des périodes de fonctionnement synchrone peut être ainsi réduite au minimum, c'est-à-dire au temps que nécessite la lecture d'un bit dans la mémoire MEM, la transmission du bit au séquenceur WLCC, et de calcul par le séquenceur WLCC de la position de l'impulsion de modulation suivante. Par exemple, parmi les seize coups d'horloge H émis ici à chaque période Tb de l'horloge binaire Hb, quatre ou cinq seulement sont généralement suffisants pour procéder aux opérations de lecture, de transmission et de calcul susmentionnées. L'asservissement de la durée des périodes asynchrones à la durée Ti entre deux impulsions est obtenu de façon simple au moyen d'un séquenceur logique prenant en compte la valeur des bits bn, bn+1, bn+2 présents dans le registre à décalage SHRG, calculant la durée Ti entre l'impulsion émise et l'impulsion suivante, et déterminant le nombre maximum de cycles de charge de la capacité Cas pouvant être cumulé avant l'impulsion suivante.

Enfin, bien que la présente invention vise de façon générale à améliorer le rapport entre l'énergie transmise par induction et l'énergie consommée par un circuit intégré, les techniques de modulation de charge par impulsions et de détermination asynchrone de la durée d'une impulsion qui viennent d'être décrites sont applicables à des circuits intégrés sans contact qui, bien que fonctionnant de façon synchrone avec la station d'émission-réception de données, comportent une source d'alimentation autonome. D'autre part, l'invention permet de prévoir une profondeur de modulation représentant 100% de l'amplitude du champ magnétique et améliore le rapport signal/bruit à la réception. L'invention s'applique également à tous types de circuits extracteurs d'horloge, par exemple ceux utilisant une bobine différente de la-bobine de modulation de charge pour recevoir une tension induite alternative.

## Revendications

1. Circuit intégré (ICI) sans contact comprenant un dispositif (LMC) de modulation de la charge d'une bobine d'antenne (Ls), un dispositif (CEC1) d'extraction d'horloge (H), et des moyens pour délivrer un signal de modulation de charge en fonction d'un signal binaire à transmettre (DTx), **caractérisé en ce qu'**il comprend des moyens (CC1) pour délivrer un signal de modulation de charge pulsé (Slm4) comprenant une suite d'impulsions de modulation de charge (I1-In) dont la durée est calibrée de façon asynchrone par la charge ou la décharge d'au moins un condensateur (Cas).

2. Circuit intégré selon la revendication 1, **caractérisé en ce qu'**il comprend des moyens (WLCC, INV1, T5, T6) pour inhiber le dispositif (CEC1) d'extraction d'horloge (H) au moins pendant l'émission des impulsions de modulation de charge.

3. Circuit intégré selon l'une des revendications 1 et 2, dans lequel les moyens (CC1) pour délivrer le signal de modulation pulsé (Slm4) comprennent au moins deux condensateurs (Cref, Cas) et des moyens (WLCC, CG1, CMP, D6, SR1, T1, T2, T3, T4) pour :
- charger le premier condensateur (Cref) avec un courant constant (Iref) avant l'émission d'une impulsion de modulation de charge, pendant une durée (Tref) fixée par un nombre déterminé de cycles d'horloge (H),
- charger le deuxième condensateur (Cas) avec un courant constant (Iref) pendant l'émission d'une impulsion, et
- arrêter l'émission de l'impulsion lorsque la tension de charge (Vas) du deuxième condensateur est égale à la tension (Vref) aux bornes du premier condensateur.

4. Circuit intégré selon l'une des revendications 1 à 3, comprenant des moyens (WLCC) pour :
- transformer le signal binaire à transmettre (DTx) en un signal codé binaire (S1) présentant au moins, à chaque bit du signal binaire, un front de variation montant ou descendant, et
- transformer des fronts de variation du signal codé binaire (S1) en impulsions de modulation de charge (I1-In) de courte durée relativement à la durée (Tb) d'un bit du signal binaire à transmettre (DTx).

5. Circuit intégré selon la revendication 4, dans lequel seuls des fronts de variation d'un même type, montant ou descendant, du signal codé binaire (S1), sont transformés en impulsions de modulation de charge par les moyens (CC1) pour délivrer le signal de modulation pulsé.

6. Circuit intégré selon l'une des revendications 1 à 5, dans lequel le signal de modulation (Slm4) est combiné avec un signal alternatif (Fsc) pour former un signal de modulation de charge comprenant des impulsions de signal alternatif.

7. Circuit intégré selon l'une des revendications 1 à 6, dans lequel les impulsions de modulation de charge sont d'une durée (Tas) inférieure ou égale au quart de la durée d'un bit du signal binaire à transmettre (DTx).

8. Circuit intégré selon l'une des revendications 1 à 7, dans lequel le dispositif (CEC1) d'extraction d'horloge est maintenu inhibé après l'émission d'une impulsion de modulation de charge, au moins pour une durée (Tref, Tas) égale à la durée d'une impulsion de modulation de charge.

9. Circuit intégré selon l'une des revendications 1 à 8, dans lequel le dispositif (CEC1) d'extraction d'horloge est agencé pour extraire un signal d'horloge (H) d'une tension alternative (Vac) induite dans la bobine d'antenne (Ls).

10. Circuit intégré selon l'une des revendications 1 à 9, **caractérisé en ce qu'**il comporte des moyens (Pd, C2) pour extraire une tension d'alimentation continue (Vcc) de la tension alternative (Vac) induite dans la bobine d'antenne (Ls).

11. Circuit intégré selon l'une des revendications 1 à 10, dans lequel les moyens pour inhiber le dispositif (CEC1) d'extraction d'horloge comprennent des moyens (T5, T6) pour mettre hors tension le dispositif d'extraction (CEC1).

## Patentansprüche

1. Kontaktloser integrierter Schaltkreis (IC1), umfassend eine Vorrichtung (LMC) zur Modulation der Ladung einer Antennen-Spule (Ls), eine Vorrichtung (CEC1) zur Entnahme eines Zeittakts (H) und Mittel zur Aussendung eines Signals zur Ladungsmodulation als Funktion eines binären Transmitter-Signals (DTx),
**dadurch gekennzeichnet, dass**
er Mittel (CC1) zur Aussendung eines gepulsten Signals zur Modulation der Ladung (Slm4) umfasst, das seinerseits wiederum eine Abfolge (I1 bis In) von Impulsen zur Modulation der Ladung umfasst, deren Dauer in asynchroner Weise durch die Auf- oder Entladung mindestens eines Kondesnators (Cas) geeicht wird.

2. Integrierter Schaltkreis gemäß Anspruch 1,
**dadurch gekennzeichnet, dass**
er Mittel (WLCC, INV1, T5, T6) zur Inhibierung der Vorrichtung (CEC1) zur Entnahme des Zeittakts (H) während zumindest der Ausstrahlung der Ladungsmodulationsimpulse umfasst.

3. Integrierter Schaltkreis gemäß einem der Ansprüche 1 und 2, worin die Mittel (CC1) zur Aussendung des gepulsten Modulationssignals (Slm4) mindestens zwei Kondensatoren (Cref, Cas) und Mittel (WLCC, CG1, CMP, D6, SR1, T1, T2, T3, T4) umfassen, um:
- den ersten Kondensator (Cref) mit einer konstanten Stromstärke (Iref) vor der Ausstrahlung eines Ladungsmodulationsimpulses während einer Zeitdauer (Tref) aufzuladen, die durch eine bestimmte Anzahl von Zeittakt-Zyklen (H) festgelegt ist,
- den zweiten Kondensator (Cas) mit einer konstanten Stromstärke (Iref) während der Ausstrahlung eines Impulses aufzuladen, und
- die Ausstrahlung des Impulses anzuhalten, wenn die Spannung der Aufladung (Vas) des zweiten Kondensators gleich der Spannung (Vref) an den Anschlüssen des ersten Kondensators ist.

4. Integrierter Schaltkreis gemäß einem der Ansprüche 1 bis 3, umfassend Mittel (WLCC) um:
- das binäre Transmitter-Signal (DTx) in ein kodiertes binäres Signal (S1) umzuwandeln, das mindestens, bei jedem Bit des binären Signals, eine aufoder absteigende Varianzfront aufweist, und
- Varianz fronten des kodierten binären Signals (S1) in Ladungsmodulationsimpulse (I1 bis In) kurzer Dauer relativ zur Dauer (Tb) eines Bit des binären Transmitter-Signals (DTx) umzuwandeln.

5. Integrierter Schaltkreis gemäß Anspruch 4, worin alleiniglich Varianzfronten eines selben Typs, auf- oder absteigend, des kodierten binären Signals (S1) in Ladungsmodulationsimpulse durch die Mittel (CC1) umgewandelt werden, um das gepulste Modulationssignal auszusenden.

6. Integrierter Schaltkreis gemäß einem der Ansprüche 1 bis 5, worin das Modulationssignal (S1m4) mit einem alternativen Signal (Fsc) kombiniert ist, um ein Ladungsmodulationssignal zu bilden, das Impulse eines alternativen Signals umfasst.

7. Integrierter Schaltkreis gemäß einem der Ansprüche 1 bis 6, worin die Ladungsmodulationsimpulse von einer Dauer (Tas) von weniger oder gleich einem Vierteil der Dauer eines Bit des binären Transmitter-Signals (DTx) sind.

8. Integrierter Schaltkreis gemäß einem der Ansprüche 1 bis 7, worin die Vorrichtung (CEC1) zur Entnahme eines Zeittakts nach der Ausstrahlung eines Ladungsmodulationsimpulses für zumindest eine Zeitdauer (Tref, Tas) gleich der Dauer eines Ladungsmodulationsimpulses inhibiert gehalten wird.

9. Integrierter Schaltkreis gemäß einem der Ansprüche 1 bis 8, worin die Vorrichtung (CEC1) zur Entnahme eines Zeittakts vorgesehen und angeordnet ist, um ein Zeittakt-Signal (H) einer Alternativ-Spannung (Vac) zu entnehmen, die in der Antennen-Spule (Ls) induziert wird.

10. Integrierter Schaltkreis gemäß einem der Ansprüche 1 bis 9, **dadurch gekennzeichnet, dass** er Mittel (Pd, C2) aufweist, um eine kontinuierliche Versorgungsspannung (Vcc) der Alternativ-Spannung (Vac) zu entnehmen, die in der Antennen-Spule (Ls) induziert wird.

11. Integrierter Schaltkreis gemäß einem der Ansprüche 1 bis 10, worin die Mittel zur Inhibierung der Vorrichtung (CEC1) zur Entnahme eines Zeittakts Mittel (T5, T6) umfassen, um die Entnahme-Vorrichtung (CEC1) spannungslos zu stellen.

## Claims

1. A contactless integrated circuit (IC1) comprising a device (LMC) for modulating the charge of an antenna coil (Ls), a device (CEC1) for extracting a clock (H), and means for delivering a signal for charge modulation as a function of a binary signal to be transmitted (DTx), **characterised in that** it comprises means (CC1) for delivering a pulsed charge modulation signal (Slm4) comprising a sequence of charge modulation pulses (I1-In) whose duration is calibrated asynchronously by the charging or discharging of at least one capacitor (Cas).

2. An integrated circuit according to claim 1 **characterised in that** it comprises means (WLCC, INV1, T5, T6) for inhibiting the clock (H) extraction device (CEC1) at least during emission of the charge modulation pulses.

3. An integrated circuit according to one of claims 1 and 2 wherein the means (CC1) for delivering the pulsed modulation signal (Slm4) comprise at least two capacitors (Cref, Cas) and means (WLCC, CG1, CMP, D6, SR1, T1, T2, T3, T4) for:
- charging the first capacitor (Cref) with a constant current (Iref) before the emission of a charge modulation pulse during a time (Tref) fixed by a given number of clock cycles (H),
- charging the second capacitor (Cas) with a constant current (Iref) during the emission of a pulse, and
- stopping the emission of the pulse when the charge voltage (Vas) of the second capacitor is equal to the voltage (Vref) at the terminals of the first capacitor.

4. An integrated circuit according to one of claims 1 to 3 comprising means (WLCC) for:
- transforming the binary signal to be transmitted (DTx) into a binary coded signal (S1) having at least at each bit of the binary signal a rising or falling variation edge, and
- transforming the variation edges of the binary coded signal (S1) into charge modulation pulses (I1-In) of short duration relative to the duration (Tb) of a bit of the binary signal to be transmitted (DTx).

5. An integrated circuit according to claim 4 wherein only the variation edges of the same type, being rising or falling, of the binary coded signal (S1), are transformed into charge modulation pulses by the means (CC1) for delivering the pulsed modulation signal.

6. An integrated circuit according to one of claims 1 to 5 wherein the modulation signal (Slm4) is combined with an alternating signal (Fsc) to form a charge modulation signal comprising alternating signal pulses.

7. An integrated circuit according to one of claims 1 to 6 wherein the charge modulation pulses are of a duration (Tas) which is less than or equal to a quarter of the duration of a bit of the binary signal to be transmitted (DTx).

8. An integrated circuit according to one of claims 1 to 7 wherein the clock extraction device (CEC1) is maintained inhibited after the emission of a charge modulation pulse at least for a time (Tref, Tas) equal to the duration of a charge modulation pulse.

9. An integrated circuit according to one of claims 1 to 8 wherein the clock extraction device (CEC1) is arranged to extract a clock signal (H) from an ac voltage (Vac) induced in the antenna coil (Ls).

10. An integrated circuit according to one of claims 1 to 9 **characterised in that** it comprises means (Pd, C2) for extracting a dc supply voltage (Vcc) from the ac voltage (Vac) induced in the antenna coil (Ls).

11. An integrated circuit according to one of claims 1 to 10 wherein the means for inhibiting the clock extraction device (CEC1) comprise means (T5, T6) for removing voltage from the extraction device (CEC1).
